# EUROPEAN PATENT SPECIFICATION

(11) **EP 2 516 755 B1**
(45) Date of publication and mention of the grant of the patent: **07.08.2019**
(21) Application number: 10838750.7
(22) Date of filing: 20.12.2010
(51) Int. Cl.: E02F 3/96, G07C 3/02, B25D 9/00, B25D 9/26, E02F 9/22, E02F 9/26, G07C 5/00

(54) **METHOD FOR DETERMINING USAGE RATE OF BREAKING HAMMER, BREAKING HAMMER, AND MEASURING DEVICE**
VERFAHREN ZUR BESTIMMUNG DER NUTZUNGSRATE EINES ABBRUCHHAMERS, ABBRUCHHAMER UND MESSVORRICHTUNG
PROCÉDÉ DE DÉTERMINATION DU TAUX D'UTILISATION DE MARTEAU D'ABATTAGE, MARTEAU D'ABATTAGE ET DISPOSITIF DE MESURE

(30) Priority: 21.12.2009 FI 20096374
(43) Date of publication of application: 31.10.2012
(73) Proprietor: Sandvik Mining and Construction Oy, 33330 Tampere (FI)
(72) Inventor: OKSMAN, Mika, 33330 Tampere (FI); LEHMUSVIRTA, Ilkka, 33330 Tampere (FI)
(74) Representative: Sandvik
(86) International application number: PCT/FI2010/051061
(87) International publication number: WO 2011/077001

(56) References cited:
- US-A1- 2003 023 325
- US-B1- 6 170 317
- US-B1- 6 510 902
- US-B2- 6 737 981

## Description

### Background of the invention

The invention relates to a method for determining the usage rate of a breaking hammer. A breaking hammer comprises a percussion device, as a result of the work cycle of which impact pulses are generated that may be transmitted to the material being processed by means of a tool so as to break the material. The operation of the percussion device causes physical phenomena that are measured with a sensor. By analysing the measuring results, it is possible to identify the work cycle of the percussion device and, on the basis thereof, define a quantity representing the usage rate of the percussion device. The usage rate determined during the operation of the percussion device is added cumulatively into a counter and may be expressed to the operator of the breaking hammer.

The invention further relates to a breaking hammer, the usage rate of which is determined by means of a measuring device. The invention also relates to a measuring device, with which the usage rate of the breaking hammer may be determined. The field of the invention is described in more detail in the preambles of the independent claims 1, 12 and 17. Such a method, a breaking hammer and a measuring device are already known from document US 6 510 902 B1.

Breaking hammers are used to break hard materials, such as rock, concrete, and the like. A breaking hammer comprises a percussion device for generating impact pulses to a breaking tool connectable to the breaking hammer. The breaking hammer is usually connected as an auxiliary device to a basic machine that may be an excavator, for example. The basic machine is typically equipped with an operating hour meter for monitoring the expiry of service cycles, among other things. However, determining the usage rate of the breaking hammer on the basis of the operating hours of the basic machine is very imprecise, because the breaking hammer is used only part of the time in comparison with the operating hours of the basic machine. Some of the operating hours of the basic machine are namely used in transferring the basic machine and positioning the breaking hammer by means of a boom. In addition, the basic machine, such as an excavator, may be used with other auxiliary devices, such as a bucket.

Thus, measuring devices have been developed to determine the usage rate of the breaking hammer independent of the basic machine. Publications US 6 510 902 B1, US 6 737 981 B2, and US 6 170 317 B1 disclose arrangements for identifying the impacts of a breaking hammer by means of different sensors. In the publications, the servicing need of the breaking hammer is determined on the basis of the number of impacts. However, it has been noted that, in practice, it is difficult to reliably measure the number of all individual impacts. It has been noted that the obtained measuring results may be quite imprecise. In result, the services of breaking hammers are performed either too late or too soon. Further, publication GB 2 442 629 A describes measuring the pressure of the pump operating the breaking hammer and determining the operating time, that is, impact time, of the percussion device on the basis of the pressure. Publication US 2003/0 110 667 A1 describes furnishing the pressure channel of the breaking hammer with a pressure switch, with which the operating time of the percussion device is determined. However, loads may be directed to the breaking hammer even when it is not generating impacts. These loads cannot in any way be taken into account in the prior-art solutions. Thus, the above-mentioned arrangements based on measuring the impact rate or time do not provide sufficiently precise information on the load directed to the breaking hammer for the purpose of proactive maintenance, for example.

### Brief description of the invention

It is an object of this invention to provide a novel and improved method and measuring device for determining the usage rate of a breaking hammer, and further a novel and improved breaking hammer equipped with this type of measuring device.

The method of the invention is defined in independent claim 1 and characterised by identifying impact pauses between impact cycles and monitoring their duration; identifying the impact pauses whose duration is shorter than a predefined time limit; summing the durations of the impact pauses having a shorter duration than the predefined time limit to define the total pause time; and taking the total pause time into account as part of the usage rate.

The breaking hammer of the invention is defined in independent claim 12 and characterised in that the measuring device is fastened to the breaking hammer, whereby it is a separate device independent of the basic machine; that the measuring device is also arranged to identify impact pauses between impact cycles and to monitor their duration; and that the measuring device is arranged to identify the impact pauses whose duration is shorter than a predefined time limit; to sum the durations of the impact pauses (IP) having a shorter duration than the predefined time limit to define the total pause time and to take the total pause time into account as part of the usage rate.

The measuring device of the invention is defined in independent claim 17 and characterised in that a control unit is also arranged to identify impact pauses between impact cycles and to monitor their duration; and that the control unit is arranged to identify the impact pauses whose duration is shorter than a predefined time limit; to sum the durations of the impact pauses having a shorter duration than the predefined time limit to define the total pause time and to take the total pause time into account as part of the usage rate.

The idea of the invention is that one or more physical phenomena caused by the work cycle of the percussion device are measured and the start and end of the impact cycles of the percussion device are determined on the basis of the measuring results. Further, the duration of each impact cycle is determined on the basis of the start and end times of the impact cycle. The durations of the impact cycles are accumulated in a time counter. Not only the total impact time but also the impact pauses between consecutive impact cycles are identified and their duration monitored. A time limit is defined in advance in a control system, and impact pauses shorter than the time limit are identified and taken into account as part of the usage rate.

An advantage of the invention is that in addition to the impact time, also short impact pauses characteristic of hammer work are taken into account in determining the usage rate. Typically, between impact cycles, that is, during impact pauses, the breaking hammer is used among other things to move broken boulders with the tool, which causes high loads to the breaking hammer. The arrangement of the invention takes into account these relatively short impact pauses, whereby the loads of the breaking device are revealed in more detail. Thus, the services of the breaking hammer can be planned in advance and in more detail. In addition, the operating life of the breaking hammer is better known, as is the future replacement time of components.

The idea of an embodiment is that the durations of impact pauses within a predefined or set time limit are determined and cumulatively summed to obtain a total pause time. The total pause time may be taken into account when loads directed to the breaking hammer and need for servicing are examined. When the total pause time is long, it usually means that a lot of boulder moving has been done with the breaking hammer, so a high amount of load differing from normal percussion operation has been directed to the breaking hammer.

The idea of an embodiment is that the operating time of the breaking hammer is determined during a desired monitoring cycle so that the total impact time and total pause time are summed. The total operating time of the breaking hammer provides an illustrative idea of the condition and maintenance needs of the breaking hammer.

The idea of an embodiment is that clock cycles are counted when the value of the measuring result exceeds a predefined trigger level, and the counting of clock cycles is interrupted after a predefined time, tₛₜₒₚ₁, has lapsed since the trigger level was exceeded without a new exceeding of the trigger level. The time tₛₜₒₚ₁ is clearly longer than the work cycle time of the hammer, but clearly shorter than a typical pause time in hammer work. Further, the last exceeding of the trigger level is determined and the clock cycle following it is defined as the end time of the impact cycle. Finally, the clock cycles between the start and end times of the impact cycle are added to the time counter. The pause time is also determined on the basis of clock cycles. When a predefined time, tₛₜₒₚ₁ has lapsed since the trigger level was exceeded without a new exceeding of the trigger level, the passing time is interpreted as an impact pause, which in turn may be classified as a shorter pause cycle or a longer stop cycle depending on its duration.

The idea of an embodiment is that a time, tₛₜₒₚ₂, which is longer than a typical pause time between impact cycles in hammer work, is set as the time limit for impact pauses.

The idea of an embodiment is that the time limit tₛₜₒₚ₂ of impact pauses is an adjustable parameter. The time limit may be programmed into a control unit, for example, or adjusted in some other manner.

The idea of an embodiment is that the measuring results are examined in relation to clock cycles of a timing device in the control unit.

The idea of an embodiment is that acceleration excitations, such as vibrations, caused by the work cycle of the percussion device are measured with one or more sensors. The sensor may be a piezo-sensor, for instance, and it may be fastened to the body of the percussion device or a housing protecting the percussion device.

The idea of an embodiment is that the breaking hammer is hydraulic. The operation of the percussion device causes pressure pulsation in its pressure system, and by monitoring this, it is possible to find out the start and end times of impact cycles, and on the basis of these, it is possible to determine the impact time of each impact cycle. Further, it is possible to determine an impact pause and its duration on the basis of the end and start times of the pressure pulsation. In addition, a pressure sensor is arranged in the breaking hammer.

The idea of an embodiment is that the measuring device is an independently working device. The measuring device comprises all devices required for measuring, result processing, and result displaying. Further, the measuring device comprises its own body or protective cover and fastening means for fastening it to the breaking hammer. Yet further, the measuring device comprises a storage for the necessary operating power, the storage being an accumulator, battery, or the like. This type of measuring device is a separate device completely independent of the basic machine.

The idea of an embodiment is that the independent measuring device can easily be arranged to any breaking hammer, and it may easily be detached and re-fastened.

The idea of an embodiment is that the independent measuring device is fastened permanently to the breaking hammer, whereby it is a breaking hammer-specific device that is always with one and the same breaking hammer.

The idea of an embodiment is that the measuring device compares the time accumulated in the time counter with at least one predefined limit value and indicates when the limit value is exceeded. The measuring device may compare the accumulated total usage time, impact time, or pause time with the limit value set for each of these.

The idea of an embodiment is that the measuring device comprises at least one indicator for indicating usage time to the operator. The indicator may indicate to the user visually or with a sound the usage time or the fact that a pre-set alarm limit has been exceeded. The measuring device may have one or more LEDs to show the usage time, or the LED may be arranged to indicate the size of the usage time by blinking.

The idea of an embodiment is that the measuring device comprises one or more data communications units, with which a data transfer connection may be established between the measuring device and an external control unit or reading device. At its simplest, the data communications unit may comprise connecting means, to which a data transfer cable may be connected for wired data transfer. Alternatively, the data communications unit may comprise means for wireless data transfer, in which case the means may include a transmitter and possibly also a receiver. The measuring device may be arranged to transfer data on the usage time either continuously or after a request has been transmitted to the control unit for supplying the data.

The idea of an embodiment is that one or more sensors measure the movement of the percussion element of the percussion device or the valve controlling it.

The idea of an embodiment is that one or more sensors measure the sound caused by the work cycle of the percussion device.

The idea of an embodiment is that one or more sensors measure the stress caused by the work cycle of the percussion device in the breaking hammer structure.

The idea of an embodiment is that the operation of the breaking hammer is monitored during a predefined monitoring time and several impact cycles are identified during it. By monitoring the durations of the impact cycles, additional information on the use of the breaking hammer and its suitability for said use and work site is obtained. The durations of the impact cycles may also be used to determine the need for maintenance.

### Brief description of the figures

Some embodiments of the invention will be described in more detail in the attached drawings, in which
Figure 1 is a schematic view of a breaking hammer arranged as an auxiliary device to an excavator,
Figure 2 is a schematic view of some measuring results received from a measuring device in the breaking hammer and related to the usage rate of the hammer during a monitoring period,
Figures 3 and 4 are schematic and graphical representations of the principle of calculating usage time when the impact cycle is identified by an acceleration sensor,
Figure 5 is a schematic and graphical representation of stopping the counting of impact time and identifying pause and stop cycles,
Figure 6 is a schematic and graphical representation of the concepts used in Figures 3 to 5,
Figure 7 is a schematic view of a hydraulic circuit for driving the percussion device and some ways of identifying the work cycle, impact cycles and impact pauses of the percussion device,
Figure 8 is a schematic representation of a breaking hammer and a measuring device connected thereto for determining times related to usage,
Figure 9 is a schematic view of a measuring device of the invention, and
Figure 10 is a schematic histogram, in which the identified impact cycles are grouped according to their duration.

In the figures, some embodiments of the invention are shown simplified for the sake of clarity. Similar parts are marked with the same reference numbers in the figures.

### Detailed description of some embodiments of the invention

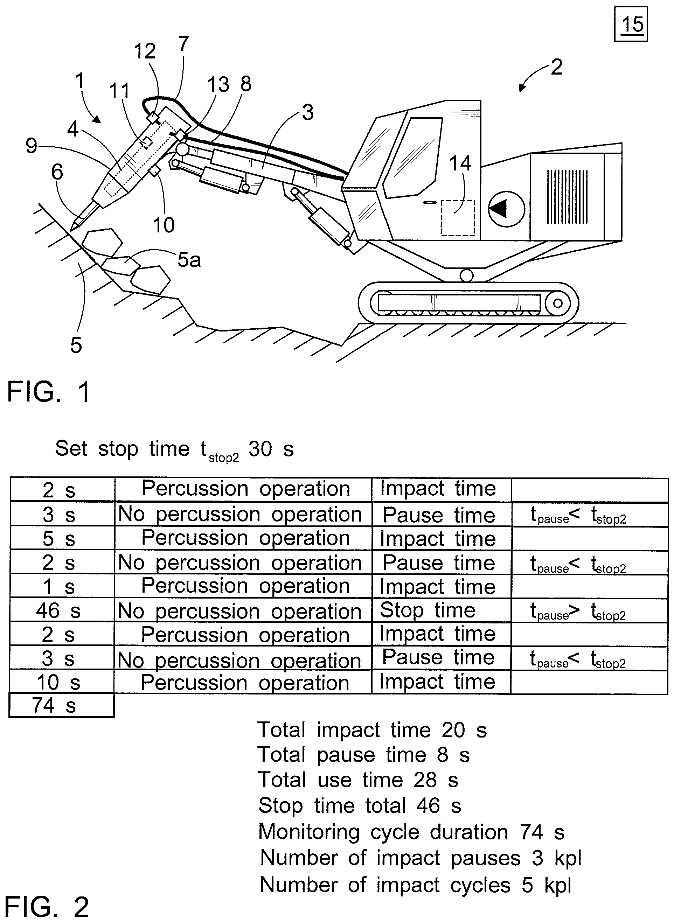

Figure 1 shows a breaking hammer 1 arranged on the free end of a boom 3 in a working machine 2, such as an excavator. Alternatively, the boom 3 may be arranged on any movable carriage- or on a fixed platform of a crushing apparatus. The breaking hammer 1 comprises a percussion device 4 for generating impact pulses. The breaking hammer 1 may be pressed by means of the boom 3 against material 5 to be broken and impacts may be simultaneously generated with the percussion device 4 to a tool 6 connected to the breaking hammer 1, which transmits the impact pulses to the material 5 to be broken. The percussion device 4 may be hydraulic, whereby it may be connected to the hydraulic system of the working machine 2 through at least one supply channel 7 and at least one discharge channel 8. The impact pulses may be generated in the percussion device 4 by means of a percussion element that may be moved back and forth in the impact direction and return direction under the influence of hydraulic fluid. Further, the breaking hammer 1 may comprise a protective casing 9, inside which the percussion device 4 may be arranged. The breaking hammer 1 is typically used not only to break actual rock, but also to move boulders 5a and the like to be broken and those already broken at the work site. The operator then places the tool 6 or casing 9 against the boulder and by moving the boom 3 moves the boulder. High transverse loads are then directed to the tool 6 and the structure of the breaking hammer and strain the bearings and protective casing of the hammer, for example. Further, more loads than is usual are directed to the breaking hammer, if there are a lot of especially short impact cycles. It has been found that a lot of short impact cycles occur, when the used breaking hammer 1 is too powerful for the work. The impact pulse provided by the breaking hammer 1 then breaks the rock so fast that the impact cycle remains very short and the rock breaks under the tool 6 so quickly that the operator cannot prepare for it. In such cases, the bottom part of the protective casing 9 of the breaking hammer often hits the object 5 being broken. Repeated usage of this type may cause the breaking hammer to prematurely wear and fail. In addition, short impact cycles may contain a lot of "empty" impacts, when the material being broken breaks suddenly and the resisting force in front of the tool disappears. The structure of the percussion device then has to receive the percussion forces through the retaining mechanism of the tool. These empty impacts strain the percussion device considerably more than normal percussion operation.

The breaking hammer 1 is equipped with one or more measuring devices 10 that comprise one or more sensors for measuring physical phenomena caused by the work cycle of the percussion device 4, such as accelerations, pressure changes, sound, stresses or the like. To the body of the percussion device 4, an acceleration sensor 11, such as a piezo sensor, may be fastened for measuring the accelerations and vibration caused by the work cycle of the percussion device 4. Alternatively, the acceleration sensor 11 may be fastened to the protective casing 9. Further, there may be a first pressure sensor 12 at the supply channel 7 and a second pressure sensor 13 at the discharge channel 8 to measure pressure pulsation caused by the operation of the percussion device 4 in the hydraulic circuit of percussion device. The pressure sensors 12, 13 are always positioned in the breaking hammer 1 and not in connection with pumps or elsewhere in the working machine 2. Measuring results received from the sensors 11, 12, 13 are transmitted to the control unit of the measuring device 10, which identifies the work cycle of the percussion device 4 and the duration of the impact cycle on the basis of the measuring results. The measuring device 10 may be arranged in the breaking hammer 1 in such a manner that it is visible to the operator so that the usage time may be indicated to the operator visually. Alternatively, information may be transmitted from the measuring device 10 to the control unit 14 of the working machine 2 or to some other control unit or reading device 15 external to the breaking hammer 1.

Figure 2 shows measuring results obtained by monitoring the use of the breaking hammer 1 during a monitoring period of selected duration. By means of the measuring device 10 mounted in the breaking hammer 1, it is possible to identify the start and end of the operation of the percussion device, whereby impact cycles, that is, the time the percussion device is working, are obtained. In addition, by monitoring the operation of the percussion device, it is possible to detect the moments between consecutive impact cycles when the percussion device is not in operation. Even though the percussion device is stopped during the time between impact cycles, it may still be used in tasks where loads are directed to it. These loads directed to the breaking hammer between impact cycles can now be taken into account. The times, when the breaking hammer is completely stopped due to transfer time of the working machine, operator break, maintenance or other reasons, are not relevant to the usage rate of the breaking hammer. No loads are then directed to the breaking hammer, which should be observed when evaluating the maintenance need, service life or usage of the breaking hammer. It is possible to set into the measuring device 10 a time tₛₜₒₚ₂, with which to separate the impact pauses, which are of interest to the usage rate, from the stop time of the breaking hammer. When the operation of the percussion device is stopped for a time longer than tₛₜₒₚ₂, it usually means that a transfer run or other interruption takes place in the breaking operation.

Figure 2 shows the total impact time that is obtained by summing the durations of impact cycles preformed during one monitoring period. The total pause time is obtained by summing the interruptions in breaking hammer operation between impact cycles, the durations of which are shorter than the set time tₛₜₒₚ₂. The total usage time of the breaking hammer is obtained by summing the total impact time and total pause time. The monitoring period has also had one longer stop cycle, the duration of which can be ignored in the calculation of the usage time. The control unit of the measuring device can calculate not only the above-mentioned parameters, but also other interesting parameters for the use of the breaking hammer. For instance, it is possible to define the ratio of total impact time to the total usage time, or correspondingly the ratio of total pause time to the total usage time. It is possible to set or program into the control unit of the measuring device various strategies, with which the measuring unit monitors the operation of the breaking device, analyzes measuring results and observations, and alerts or informs the operator.

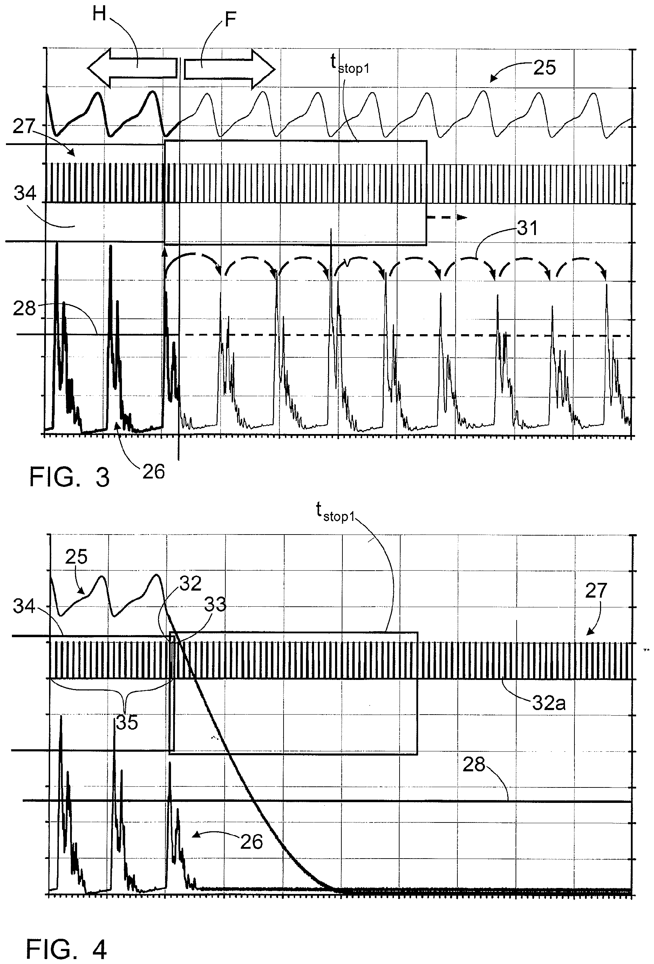

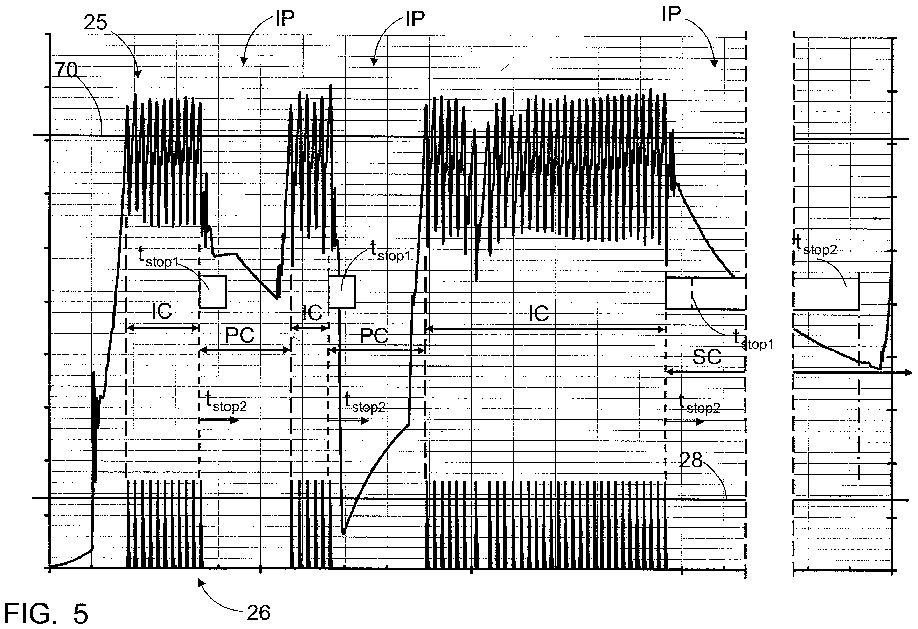

In Figures 3 to 6, the horizontal axis presents time [s], the left vertical axis presents the Piezo sensor value [volt], and the right vertical axis presents pressure [bar]. In addition, in Figure 3, the marking H refers to past time and F to future time. In Figure 5, the descriptor is cut at the right edge so that phenomena of different durations can be shown in the same descriptor.

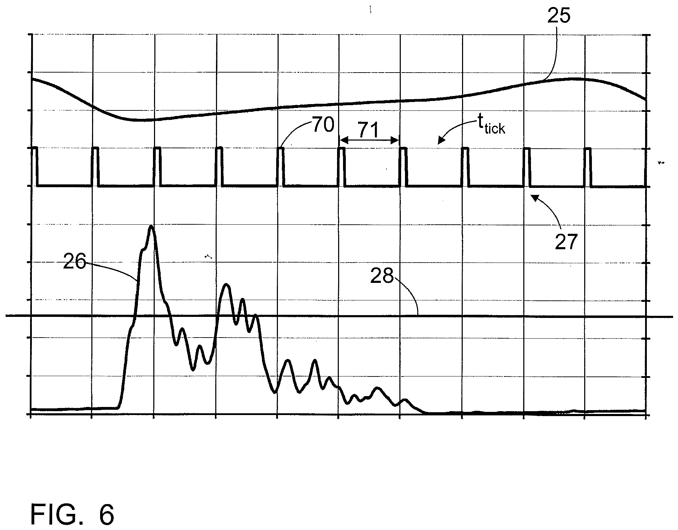

Figure 3 illustrates the measurement of impact time on the basis of measuring accelerations caused by the operation of the percussion device. Figure 3 shows in the same figure both a pressure pulsation curve 25 and acceleration curve 26 obtained from the acceleration sensor. The control unit of the measuring device further contains a timing device, the operation of which is shown as a pulse string 27 in Figure 3. The control unit may be a processor with a system clock running at a 1 to 10 millisecond clock cycle t_{tick} that is illustrated by the distance 71 between the ascending edges of the rectangular pulses 70 in Figure 6. The clock cycle t_{tick} of the system clock may be defined by means of a crystal or oscillator. Figure 3 shows on the basis of the pressure pulsation curve 25 and acceleration curve 26 that the percussion device is working and generating a cycle of impacts. The work cycle of the percussion device is also clearly seen from the curves 25 and 26. An acceleration limit value, that is, trigger level 28, can be set in advance into the control unit of the measuring device, and accelerations exceeding this value trigger the identification of an impact cycle. When the control unit identifies an acceleration exceeding the trigger level 28, it construes that the percussion device is working and starts the counting of clock cycles to determine the impact time of the impact cycle. The clock cycles are counted until the stopping of the percussion device is identified.

The end of the operation of the percussion device is detected from the fact that an acceleration exceeding the trigger level 28 is no longer detected. To improve measuring precision, the end time of an impact cycle needs to be defined precisely. Thus, a stop time tₛₜₒₚ₁, the duration of which is always longer than the duration of the work cycle of the percussion device, may be defined in the control unit. Typically, the duration of the work cycle of the percussion device is between 20 and 200 ms, the impact frequency then being 5 to 50 Hz. Depending on the percussion device, the impact frequency may naturally also be higher. When the control unit identifies vibration exceeding the trigger level 28, it begins counting the stop time tₛₜₒₚ₁ from the start time of the triggering. If a new vibration exceeding the trigger level 28 is identified before the stop time tₛₜₒₚ₁ has elapsed, the counting of the impact time is continued uninterrupted and the counting of the stop time tₛₜₒₚ₁ is re-started from the start time of the new triggering. Transferring the stop time tₛₜₒₚ₁ to the start time of the next triggering is illustrated in Figure 3 by arrows 31.

Figure 4 shows by examining the pressure curve 25 and acceleration curve 26, the three last work cycles of an impact cycle, after which the percussion device has been stopped. The counting of the stop time tₛₜₒₚ₁ was begun at time instant 32, when the latest acceleration exceeding the trigger level 28 was identified. When a new acceleration exceeding the trigger level 28 is not identified during the stop time tₛₜₒₚ₁, the control unit interprets the impact cycle as ended. After this, the control unit defines the clock cycle 33 following the latest trigger time 32 and adds the clock cycles 35 accumulated up till then into the time counter 34. Thanks to this arrangement, the end time of the impact cycle may be defined at an accuracy of one clock cycle of the timing device. From the end of the impact cycle, an impact pause begins that according its duration is determined either as a pause cycle or stop cycle.

When examining the use of a breaking hammer, a special object of interest is the so-called hammer work time that consists of the durations of impact cycles and pause cycles within the examination period. The rest of the time consists of stop cycles and is, thus, stop time.

Figure 5 illustrates the identification of the end of the impact cycle IC and the start of the impact pause IP by examining the pressure curve 25 and acceleration curve 26. Figure 5 also illustrates the division of the impact pause IP into a shorter duration pause cycle PC and longer duration stop cycle SC. When a new impact is not detected during the first stop time tₛₜₒₚ₁, the impact cycle IC is considered to have ended at the clock cycle following the last impact. The impact pause IP begins from the same time instant. When the next acceleration exceeding the trigger level 28 is detected, a new impact cycle IC begins. Further the figure shows the second stop time tₛₜₒₚ₂, the counting of which begins at the same time as the counting of the first stop time tₛₜₒₚ₁. If a new impact is not detected during the second stop time tₛₜₒₚ₂, the impact pause is interpreted as a stop cycle SC. If an impact is detected before the pre-set second stop time tₛₜₒₚ₂ has elapsed, the impact pause IP is interpreted as a pause cycle PC. It should be noted that the stop times may be counted in one and the same time counter or alternatively two or more time counters may be used.

Figure 5 shows the vibration trigger level 28 and pressure signal trigger level 70. The identification of impact cycles IC and impact pauses IP may take place by monitoring either vibration or pressure or both.

Figure 6 presents for the sake of clarity some concepts shown in Figures 3 to 5.

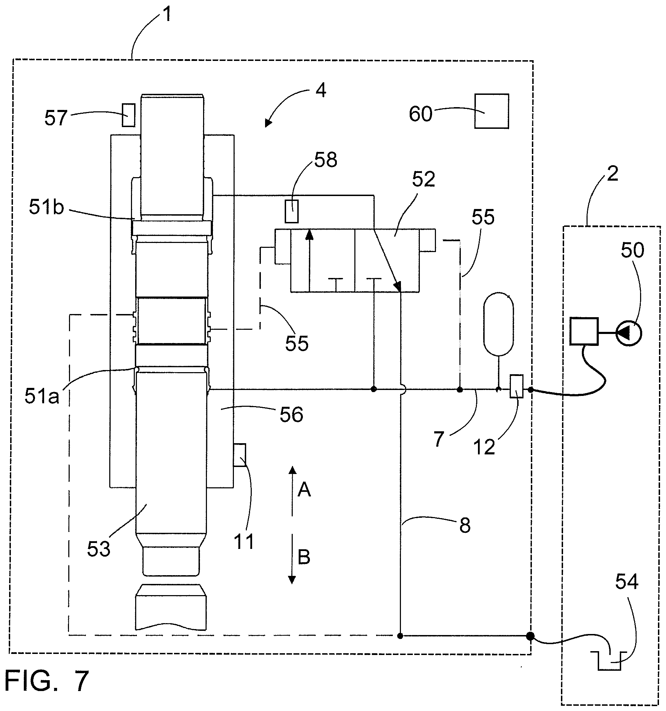

Figure 7 shows a hydraulic system for driving the percussion device 4 of the breaking hammer. Hydraulic pressure, which is led through tubes or corresponding channels to the breaking hammer 1 located in the boom, is generated with a pump 50 located in the working machine 2. The breaking hammer 1 has a supply channel 7 that directs the hydraulic fluid into a first working pressure space 51a and second working pressure space 51b of the percussion device 4. By means of a valve 52, it is possible to act on the pressure in the second working pressure space 51b so as to provide the movement of a percussion element 53 in the percussion direction B. In the situation of the figure, the valve 52 guides the pressure medium from the second working pressure space 51b to a discharge line 8 and on to a tank 54. The pressure acting in the first working pressure space 51a then moves the percussion element 53 in the return direction A. The movement of the valve 52 is controlled by the pressures acting on control pressure channels 55. The valve 52 and percussion element 53 continue their reciprocating movement as long as pressure medium is supplied to the supply channel 7. An acceleration sensor 11 or stress-measuring sensor may be arranged directly to the body 56 of the percussion device 4 or to the protective casing (not shown) arranged around it. Alternatively, the pressure in the supply channel 7 may be measured by means of a pressure sensor 12 arranged in the breaking hammer 1. Measuring results obtained from the sensors 11 and 12 may be applied in the above-mentioned ways to trigger the start or end of impact cycle and pause cycle measurement. It is also possible to measure the movement of the percussion element 53 by means of a first motion sensor 57 and the movement of the valve 52 by means of a second motion sensor 58. On the basis of the measurement data received from the motion sensors 57 and 58, the percussion device 4 can be identified as working. It is then also possible to identify the start time of the impact cycle for the purpose of calculating the impact time. Further, if no identification data is received from the sensors 57 and 58, the impact cycle can be interpreted as having ended. It is then possible to apply to the interruption of the impact cycle counting and to the counting of the pause cycle a corresponding arrangement as described in connection with Figures 3, 4, 5, and 6.

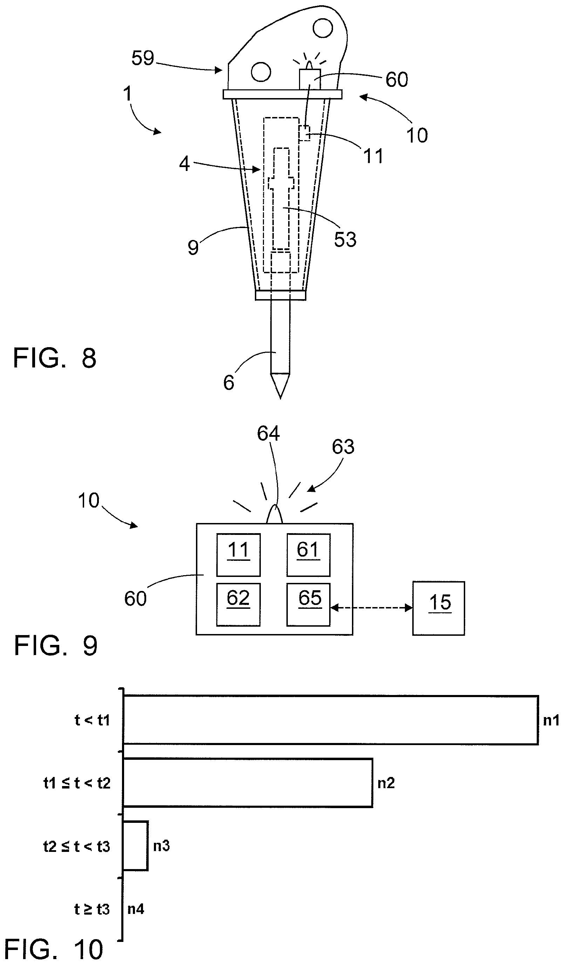

Figure 8 shows in a highly simplified manner the breaking hammer 1 and the measuring device 10 connected thereto. The measuring device 10 may be an independent device fastened to the protective casing 9 or fastening piece 59 of the breaking hammer. The independent measuring device 10 is in no way dependent on the working machine. The sensor 11 of the measuring device 10 may be fastened to the body 56 of the percussion device 4, and the measuring results may be transmitted from the sensor 11 to a control unit 60 over wire or wirelessly.

Figure 9 shows a measuring device 10, in which the sensor 11 is integrated as part of the control unit 60. The control unit 60 also has a timing device 61 and time counter 62. Further, the control unit 60 may have a detection unit 63 comprising one or more LEDs 64 for indicating usage rate. The control unit 60 may also comprise a data communications unit 65, by means of which the control unit 60 may exchange information with an external unit 15 over wire or wirelessly.

Figure 10 illustrates the processing of impact cycles on the basis of durations. The measurement of impact cycle durations and the obtained measuring results can namely also be utilised in other ways than presented above. The operation of the percussion device may be monitored over a predefined monitoring time, during which several impact cycles are identified and the duration of each individual impact cycle is obtained. The impact cycles can also be divided on the basis of their durations. The grounds for the division may be as follows, for instance: duration less than t₁ seconds; duration at least t₁ seconds, but less than t₂ seconds; duration at least t₂ seconds, but less than t₃ seconds; and duration at least t₃ seconds. With this grouping, valuable additional information is obtained on the use of the breaking hammer, for instance. By analysing this information, it is possible to select a suitable breaking device for each task, and to detect an incorrect working technique of the operator. It is further possible to define the need for maintenance on the basis of the analysed information. If the monitoring period of the device contained several very short or very long impact cycles, the device could be submitted to maintenance prematurely, even if other maintenance criteria were not met yet.

It should be mentioned that it is possible to use as the timing device any electric timing device that is suitable for the purpose, runs on a defined clock cycle and whose clock cycles may be added to an electric time counter. The timing device may be a crystal or oscillator in connection with a processor. Further, the timing device may be an electronic integrated circuit or implemented by program or in some other manner. One timing device may be arranged to count both the impact time and pause time or, alternatively, there may be several timing devices. Similarly, there may be one or more time counters.

The measuring processes and measuring result analyses disclosed in this patent application may be provided by executing a software product in the control unit of the measuring device, the control unit of the rock breaking device, or in some other control unit. The software product may be stored in a memory means, such as a memory stick, memory disc, server, or the like.

The drawings and the related description are only intended to illustrate the idea of the invention. The invention may vary in its details within the scope of the claims.

## Claims

1. A method for determining the usage rate of a breaking hammer, the breaking hammer (1) comprising a percussion device (4) for generating impact pulses, the method comprising:
measuring by means of at least one sensor (11) at least one physical phenomenon caused by the operation of the percussion device (4);
transmitting the measuring results obtained from the sensor (11) to at least one control unit (60) that comprises at least one timing device (61);
identifying in the control unit (60) on the basis of the measuring results the work cycle and impact cycles (IC) of the percussion device (4), and defining by means of the timing device (61) durations for the impact cycles (IC); and
summing cumulatively in the counter of the control unit (60) the durations of the impact cycles (IC) to obtain the total impact time;
**characterised by**
identifying impact pauses (IP) between the impact cycles (IC) and monitoring their duration;
identifying the impact pauses (IP) with a duration shorter than a predefined time limit (tₛₜₒₚ₂);
summing the durations of the impact pauses (IP) having a shorter duration than the predefined time limit (tₛₜₒₚ₂) to define the total pause time; and
taking the total pause time into account as part of the usage rate.

2. A method as claimed in claim 1, **characterised by** defining the total usage time of the breaking hammer by summing the total impact time and total pause time.

3. A method as claimed in claim 1, **characterised by**
identifying the start and end times of the impact cycle (IC) on the basis of the measuring results;
starting the counting of the duration of the impact pause (IP) from the detected end time of the impact cycle (IC);
ending the counting of the duration of the impact pause (IP), when the start time of a new impact cycle (IC) is identified; and
counting the duration of the impact pause (IP) at most until the defined time limit (tₛₜₒₚ₂).

4. A method as claimed in any one of the preceding claims, **characterised by**
interpreting the impact pauses (IP) with a duration exceeding the predefined time limit (tₛₜₒₚ₂) as stop cycles (SC) in the use of the breaking hammer, when substantially no loads are directed to the breaking hammer; and
ignoring these stop cycles (SC) completely when determining the usage rate of the breaking hammer.

5. A method as claimed in any one of the preceding claims, **characterised by**
examining the operation of the percussion device in relation to the clock cycles (t_{tick}) of the running of the timing device (61) in the control unit (60);
adding the time cycles (t_{tick}) cumulatively into the time counter (62) after an at least one first criterion pre-set for the measuring results is met;
interrupting the adding of clock cycles (t_{tick}) into the time counter (62), when a second pre-set criterion is met; and
continuing the adding of clock cycles (t_{tick}) into the time counter (62), when the first pre-set criterion is again met.

6. A method as claimed in any one of the preceding claims, **characterised by**
measuring with the acceleration sensor (11) vibrations caused by the operation of the percussion device (4);
examining the measuring results in relation to the clock cycles (t_{tick}) of the running of the timing device (61) in the control unit (60);
counting the clock cycles (t_{tick}), when the value of the measuring result exceeds a predefined trigger level (28);
interrupting the counting of the clock cycles (t_{tick}) after a predefined stop time (tₛₜₒₚ₁) has elapsed from the exceeding of the trigger level (28) without a new exceeding of the trigger level (28);
determining the last exceeding of the trigger level (28) and defining the clock cycle (t_{tick}) following it as the end time of the impact cycle (IC); and
adding the clock cycles (35) between the start and end times of the impact cycle to the time counter (62).

7. A method as claimed in any one of preceding claims 1 to 5, **characterised by**
measuring with a pressure sensor (12) positioned in the breaking hammer (1) the pressure of a pressure medium acting in a pressure medium circuit of the percussion device (4);
detecting pressure pulsation (25) caused by the work cycle of the percussion device (4) during an impact cycle (IC);
determining the start and end times of the impact cycle (IC) on the basis of the pressure pulsation; and
using the start and end times of the impact cycle (IC) to define the impact cycle (IC) and impact pause (IP).

8. A method as claimed in any one of the preceding claims, **characterised by**
comparing the impact time accumulated into the time counter (62) with at least one predefined impact time limit value, and indicating that the limit value has been exceeded.

9. A method as claimed in claim 2, **characterised by**
comparing the usage time accumulated into the time counter (62) with at least one predefined usage time limit value, and indicating that the limit value has been exceeded.

10. A method as claimed in any one of the preceding claims, **characterised by**
comparing the pause time accumulated into the time counter (62) with at least one predefined pause time limit value, and indicating that the limit value has been exceeded.

11. A method as claimed in any one of the preceding claims, **characterised by**
monitoring the operation of the breaking hammer (1) during a monitoring time and identifying several impact cycles (IC) and the duration of each impact cycle; and
using the distribution of the durations of the impact cycles (IC) as one additional criterion in the determination of the usage rate.

12. A breaking hammer comprising:
fastening means for fastening the breaking hammer (1) detachably to a boom of a basic machine;
a percussion device (4) for generating impact pulses;
a tool (6) arranged to receive impact pulses and to transmit them to the material (5) to be broken; and
at least one measuring device (10) for determining the usage rate of the breaking hammer (1), the measuring device (10) comprising at least one sensor (11) for measuring at least one physical phenomenon caused by the work cycle of the percussion device (4), at least one control unit (60) for processing the measuring results and determining the usage rate, and further at least one counter, into which the values representing the usage rate are cumulatively added;
the measuring device (10) being also arranged to identify on the basis of the measuring results received from the sensor (11) the starting and ending of an impact cycle (IC) of the percussion device (4), and to calculate the duration of the impact cycle on the basis thereof;
**characterised in that**
the measuring device (10) is fastened to the breaking hammer (1), whereby it is an independent device separate from the basic machine,
the measuring device (10) is also arranged to identify impact pauses (IP) between impact cycles (IC) and to monitor their duration;
the measuring device (10) is arranged to identify the impact pauses (IP) with a duration shorter than the predefined time limit (tₛₜₒₚ₂); and
the measuring device (10) is arranged to sum the durations of the impact pauses (IP) having a shorter duration than the predefined time limit (tₛₜₒₚ₂) to define the total pause time and to take the total pause time into account as part of the usage rate.

13. A breaking hammer as claimed in claim 12, **characterised in that**
a time limit (tₛₜₒₚ₂) of desired length for impact pauses (IP) is settable in the control unit (60) of the measuring device (10).

14. A breaking hammer as claimed in claim 12 or 13, **characterised in that**
the sensor is an acceleration sensor (11); and
the acceleration sensor (11) is fastened to the body (56) of the percussion device (4) for measuring vibrations caused by the work cycle of the percussion device.

15. A breaking hammer as claimed in claim 12 or 13, **characterised in that**
the sensor is an acceleration sensor (11) arranged to measure vibrations caused by the work cycle of the percussion device;
there is at least one protective casing (9) around the percussion device (4); and
the acceleration sensor (11) is fastened to the protective casing (9).

16. A breaking hammer as claimed in claim 12 or 13, **characterised in that**
the percussion device (4) is hydraulic;
the sensor is a pressure sensor (12) arranged to measure pressure pulsation (25) caused by the operation of the percussion device in the pressure medium circuit of the percussion device; and
the pressure sensor (12) is arranged in the breaking hammer (1).

17. A measuring device of the usage rate of a breaking hammer comprising:
at least one sensor (11, 12, 57, 58) with which at least one physical phenomenon caused by the operation of the percussion device (4) belonging to the breaking hammer (1) is measured;
at least one control unit (60) for processing the measuring results received from the sensor and for determining the usage rate;
the control unit (60) comprising at least one timing device (61) and at least one time counter (62);
the control unit (60) being arranged to identify on the basis of the measuring results the starting and ending of impact cycles of the percussion device (4) and to determine the duration of each impact cycle (IC);
the control unit (60) being arranged to add the durations of the impact cycles (IC) cumulatively into the time counter (62);
**characterised in that**
the control unit (60) is also arranged to identify impact pauses (IP) between impact cycles (IC) and to monitor their duration;
the control unit (60) is arranged to identify and take into account the impact pauses (IP) with a duration shorter than the predefined time limit (tₛₜₒₚ₂); and
the control unit (60) is arranged to sum the durations of the impact pauses (IP) having a shorter duration than the predefined time limit (tₛₜₒₚ₂) to define the total pause time and to take the total pause time into account as part of the usage rate.

## Patentansprüche

1. Verfahren zum Bestimmen der Nutzungsrate eines Brechhammers, wobei der Brechhammer (1) eine Schlagvorrichtung (4) zum Erzeugen von Schlagimpulsen umfasst, wobei das Verfahren umfasst:
Messen mindestens eines physikalischen Phänomens, das durch den Betrieb der Schlagvorrichtung (4) verursacht wird, mit Hilfe mindestens eines Sensors (11);
Übertragen der vom Sensor (11) erhaltenen Messergebnisse an mindestens eine Steuereinheit (60), die mindestens eine Zeitschaltvorrichtung (61) umfasst;
Identifizieren des Arbeitszyklus und der Schlagzyklen (IC) der Schlagvorrichtung (4) in der Steuereinheit (60) auf der Grundlage der Messergebnisse und Definieren von Zeitdauern für die Schlagzyklen (IC) mit Hilfe der Zeitschaltvorrichtung (61); und
kumulatives Summieren der Zeitdauern der Schlagzyklen (IC) im Zähler der Steuereinheit (60), um die gesamte Schlagzeit zu erhalten;
**gekennzeichnet durch**
Identifizieren von Schlagpausen (IP) zwischen den Schlagzyklen (IC) und Überwachung ihrer Zeitdauer;
Identifizieren der Schlagpausen (IP) mit einer Zeitdauer, die kürzer als eine vordefinierte Zeitbegrenzung (tₛₜₒₚ₂) ist;
Summieren der Zeitdauern der Schlagpausen (IP) mit einer kürzeren Zeitdauer als der vordefinierten Zeitbegrenzung (tₛₜₒₚ₂), um die Gesamtpausenzeit zu definieren; und
Berücksichtigen der gesamten Pausenzeit als Teil der Nutzungsrate.

2. Verfahren nach Anspruch 1, **gekennzeichnet durch**
Definieren der gesamten Nutzungsdauer des Brechhammers durch Summieren der gesamten Schlagzeit und der gesamten Pausenzeit.

3. Verfahren nach Anspruch 1, **gekennzeichnet durch**
Identifizieren der Start- und Endzeiten des Schlagzyklus (IC) auf der Grundlage der Messergebnisse;
Starten des Zählens der Zeitdauer der Schlagpause (IP) ab der erfassten Endzeit des Schlagzyklus (IC);
Beenden des Zählens der Zeitdauer der Schlagpause (IP), wenn die Startzeit eines neuen Schlagzyklus (IC) identifiziert wird; und
Zählen der Zeitdauer der Schlagpause (IP) höchstens bis zur definierten Zeitbegrenzung (tₛₜₒₚ₂).

4. Verfahren nach einem der vorstehenden Ansprüche, **gekennzeichnet durch**
Interpretieren der Schlagpausen (IP) mit einer Zeitdauer, die die vorgegebene Zeitbegrenzung (tₛₜₒₚ₂) überschreitet, als Stoppzyklen (SC) bei der Verwendung des Brechhammers, wenn im Wesentlichen keine Lasten auf den Brechhammer gerichtet sind; und
vollständiges Ignorieren dieser Stoppzyklen (SC) beim Bestimmen der Nutzungsrate des Brechhammers.

5. Verfahren nach einem der vorstehenden Ansprüche, **gekennzeichnet durch**
Untersuchen des Betriebs der Schlagvorrichtung in Bezug auf die Taktzyklen (t_{tick}) des Laufens der Zeitschaltvorrichtung (61) in der Steuereinheit (60);
kumulatives Addieren der Taktzyklen (t_{tick}) in den Zeitzähler (62), nachdem ein mindestens ein erstes für die Messergebnisse voreingestelltes Kriterium erfüllt ist;
Unterbrechen des Addierens von Taktzyklen (t_{tick}) in den Zeitzähler (62), wenn ein zweites voreingestelltes Kriterium erfüllt ist; und
Fortsetzen des Addierens von Taktzyklen (t_{tick}) in den Zeitzähler (62), wenn das erste voreingestellte Kriterium wieder erfüllt ist.

6. Verfahren nach einem der vorstehenden Ansprüche, **gekennzeichnet durch**
Messen von Vibrationen mit dem Beschleunigungssensor (11), die durch den Betrieb der Schlagvorrichtung (4) verursacht werden;
Untersuchen der Messergebnisse in Bezug auf die Taktzyklen (t_{tick}) des Laufens der Zeitschaltvorrichtung (61) in der Steuereinheit (60);
Zählen der Taktzyklen (t_{tick}), wenn der Wert des Messergebnisses einen vorgegebenen Triggerpegel (28) überschreitet;
Unterbrechen des Zählens der Taktzyklen (t_{tick}) nach Ablauf einer vordefinierten Stoppzeit (tₛₜₒₚ₁) ab der Überschreitung des Triggerpegels (28) ohne eine erneute Überschreitung des Triggerpegels (28);
Bestimmen der letzten Überschreitung des Triggerpegels (28) und Definieren des darauf folgenden Taktzyklus (t_{tick}) als Endzeit des Schlagzyklus (IC); und
Addieren der Taktzyklen (35) zwischen der Start- und Endzeit des Schlagzyklus zu dem Zeitzähler (62).

7. Verfahren nach einem der Ansprüche 1 bis 5, **gekennzeichnet durch**
Messen des Drucks eines Druckmediums, das in einem Druckmittelkreislauf der Schlagvorrichtung (4) wirkt, mit einem in dem Brechhammer (1) positionierten Drucksensor (12);
Erfassen von Druckpulsationen (25), die durch den Arbeitszyklus der Schlagvorrichtung (4) während eines Schlagzyklus (IC) verursacht werden;
Bestimmen der Start- und Endzeiten des Schlagzyklus (IC) auf der Grundlage der Druckpulsationen; und
Verwenden der Start- und Endzeit des Schlagzyklus (IC), um den Schlagzyklus (IC) und die Schlagpause (IP) zu definieren.

8. Verfahren nach einem der vorstehenden Ansprüche, **gekennzeichnet durch**
Vergleichen der in den Zeitzähler (62) akkumulierten Schlagzeit mit mindestens einem vordefinierten Schlagzeitgrenzwert und Anzeigen, dass der Grenzwert überschritten wurde.

9. Verfahren nach Anspruch 2, **gekennzeichnet durch**
Vergleichen der in den Zeitzähler (62) akkumulierten Nutzungszeit mit mindestens einem vordefinierten Nutzungszeitgrenzwert und Anzeigen, dass der Grenzwert überschritten wurde.

10. Verfahren nach einem der vorstehenden Ansprüche, **gekennzeichnet durch**
Vergleichen der in den Zeitzähler (62) akkumulierten Pausenzeit mit mindestens einem vordefinierten Pausenzeitgrenzwert und Anzeigen, dass der Grenzwert überschritten wurde.

11. Verfahren nach einem der vorstehenden Ansprüche, **gekennzeichnet durch**
Überwachen des Betriebs des Brechhammers (1) während einer Überwachungszeit und Identifizieren mehrerer Schlagzyklen (IC) und der Zeitdauer jedes Schlagzyklus; und
Verwendung der Verteilung der Zeitdauern der Schlagzyklen (IC) als ein zusätzliches Kriterium bei der Bestimmung der Nutzungsrate.

12. Brechhammer, umfassend:
Befestigungsmittel zum lösbaren Befestigen des Brechhammers (1) an einem Ausleger einer Basismaschine;
eine Schlagvorrichtung (4) zum Erzeugen von Schlagimpulsen;
ein Werkzeug (6), das angeordnet ist, um Schlagimpulse zu empfangen und sie an das zu brechende Material (5) zu übertragen; und
mindestens eine Messvorrichtung (10) zum Bestimmen der Nutzungsrate des Brechhammers (1), wobei die Messvorrichtung (10) mindestens einen Sensor (11) zum Messen mindestens eines physikalischen Phänomens, das durch den Arbeitszyklus der Schlagvorrichtung (4) verursacht wird, mindestens eine Steuereinheit (60) zum Verarbeiten der Messergebnisse und zum Bestimmen der Nutzungsrate und weiter mindestens einen Zähler umfasst, in den die Werte, die die Nutzungsrate darstellen, kumulativ addiert werden;
wobei die Messvorrichtung (10) auch angeordnet ist, um auf der Grundlage der vom Sensor (11) empfangenen Messergebnisse das Starten und Beenden eines Schlagzyklus (IC) der Schlagvorrichtung (4) zu identifizieren und die Zeitdauer des Schlagzyklus auf der Grundlage derselben zu berechnen;
**dadurch gekennzeichnet, dass**
die Messvorrichtung (10) an dem Brechhammer (1) befestigt ist, wodurch sie eine von der Basismaschine getrennte unabhängige Vorrichtung ist,
die Messvorrichtung (10) auch angeordnet ist, um Schlagpausen (IP) zwischen Schlagzyklen (IC) zu identifizieren und deren Zeitdauer zu überwachen;
die Messvorrichtung (10) angeordnet ist, um die Schlagpausen (IP) mit einer Zeitdauer zu identifizieren, die kürzer als die vordefinierte Zeitbegrenzung (tₛₜₒₚ₂) ist; und
die Messvorrichtung (10) angeordnet ist, um die Zeitdauern der Schlagpausen (IP) mit einer kürzeren Zeitdauer als der vordefinierten Zeitbegrenzung (tₛₜₒₚ₂) zu summieren, um die Gesamtpausenzeit zu definieren und die Gesamtpausenzeit als Teil der Nutzungsrate zu berücksichtigen.

13. Brechhammer nach Anspruch 12, **dadurch gekennzeichnet, dass**
in der Steuereinheit (60) der Messvorrichtung (10) eine Zeitbegrenzung (tₛₜₒₚ₂) von gewünschter Länge für Schlagpausen (IP) einstellbar ist.

14. Brechhammer nach Anspruch 12 oder 13, **dadurch gekennzeichnet, dass**
der Sensor ein Beschleunigungssensor (11) ist; und
der Beschleunigungssensor (11) am Körper (56) der Schlagvorrichtung (4) befestigt ist, um Vibrationen zu messen, die durch den Arbeitszyklus der Schlagvorrichtung verursacht werden.

15. Brechhammer nach Anspruch 12 oder 13, **dadurch gekennzeichnet, dass**
der Sensor ein Beschleunigungssensor (11) ist, der angeordnet ist, um Vibrationen zu messen, die durch den Arbeitszyklus der Schlagvorrichtung verursacht werden;
mindestens ein Schutzgehäuse (9) um die Schlagvorrichtung (4) herum vorhanden ist; und
der Beschleunigungssensor (11) an dem Schutzgehäuse (9) befestigt ist.

16. Brechhammer nach Anspruch 12 oder 13, **dadurch gekennzeichnet, dass**
die Schlagvorrichtung (4) hydraulisch ist;
der Sensor ein Drucksensor (12) ist, der angeordnet ist, um die Druckpulsationen (25) zu messen, die durch den Betrieb der Schlagvorrichtung im Druckmittelkreislauf der Schlagvorrichtung verursacht wird; und
der Drucksensor (12) in dem Brechhammer (1) angeordnet ist.

17. Messvorrichtung der Nutzungsrate eines Brechhammers, umfassend:
mindestens einen Sensor (11, 12, 57, 58), mit dem mindestens ein physikalisches Phänomen gemessen wird, das durch den Betrieb der zum Brechhammer (1) gehörenden Schlagvorrichtung (4) verursacht wird;
mindestens eine Steuereinheit (60) zum Verarbeiten der vom Sensor empfangenen Messergebnisse und zum Bestimmen der Nutzungsrate;
wobei die Steuereinheit (60) mindestens eine Zeitschaltvorrichtung (61) und mindestens einen Zeitzähler (62) umfasst;
wobei die Steuereinheit (60) angeordnet ist, um auf der Grundlage der Messergebnisse das Starten und Beenden von Schlagzyklen der Schlagvorrichtung (4) zu identifizieren und die Zeitdauer jedes Schlagzyklus (IC) zu bestimmen;
wobei die Steuereinheit (60) angeordnet ist, um die Zeitdauer der Schlagzyklen (IC) kumulativ in den Zeitzähler (62) zu addieren;
**dadurch gekennzeichnet, dass**
die Steuereinheit (60) auch angeordnet ist, um Schlagpausen (IP) zwischen Schlagzyklen (IC) zu identifizieren und deren Zeitdauer zu überwachen;
die Steuereinheit (60) angeordnet ist, um die Schlagpausen (IP) mit einer Zeitdauer, die kürzer als die vordefinierte Zeitbegrenzung (tₛₜₒₚ₂) ist, zu identifizieren und zu berücksichtigen; und
die Steuereinheit (60) angeordnet ist, um die Zeitdauern der Schlagpausen (IP) mit einer kürzeren Zeitdauer als der vordefinierten Zeitbegrenzung (tₛₜₒₚ₂) zu summieren, um die Gesamtpausenzeit zu definieren und die Gesamtpausenzeit als Teil der Nutzungsrate zu berücksichtigen.

## Revendications

1. Procédé de détermination du taux d'usage d'un marteau d'abattage, le marteau d'abattage (1) comprenant un dispositif de percussion (4) pour générer des impulsions d'impact, le procédé comprenant :
la mesure au moyen d'au moins un capteur (11) d'au moins un phénomène physique provoqué par le fonctionnement du dispositif de percussion (4) ;
la transmission des résultats de mesure obtenus par le capteur (11) à au moins une unité de commande (60) qui comprend au moins un dispositif de chronométrage (61) ;
l'identification dans l'unité de commande (60) sur la base des résultats de mesure du cycle de travail et des cycles d'impact (IC) du dispositif de percussion (4), et la définition au moyen du dispositif de chronométrage (61) de durées des cycles d'impact (IC) ; et
l'addition cumulée dans le compteur de l'unité de commande (60) des durées des cycles d'impact (IC) pour obtenir le temps d'impact total ;
**caractérisé par**
l'identification de pauses d'impact (IP) entre les cycles d'impact (IC) et la surveillance de leur durée ;
l'identification des pauses d'impact (IP) d'une durée plus courte qu'une limite de temps prédéfinie (tₛₜₒₚ₂) ;
l'addition des durées des pauses d'impact (IP) de durée plus courte que la limite de temps prédéfinie (tₛₜₒₚ₂) afin de définir le temps de pause total ; et
la prise en compte du temps de pause total en tant que partie du taux d'usage.

2. Procédé selon la revendication 1, **caractérisé par**
la définition du temps d'usage total du marteau d'abattage par addition du temps d'impact total et du temps de pause total.

3. Procédé selon la revendication 1, **caractérisé par**
l'identification des temps de démarrage et d'achèvement du cycle d'impact (IC) sur la base des résultats de mesure ;
le démarrage du comptage de la durée de la pause d'impact (IP) à partir du temps d'achèvement détecté du cycle d'impact (IC) ;
l'achèvement du comptage de la durée de la pause d'impact (IP) lorsque le temps de démarrage d'un nouveau cycle d'impact (IC) est identifié ; et
le comptage de la durée de la pause d'impact (IP) au maximum jusqu'à la limite de temps définie (tₛₜₒₚ₂).

4. Procédé selon l'une quelconque des revendications précédentes, **caractérisé par**
l'interprétation des pauses d'impact (IP) d'une durée dépassant la limite de temps prédéfinie (tₛₜₒₚ₂) comme cycles d'arrêt (SC) dans l'utilisation du marteau d'abattage lorsque sensiblement aucune charge n'est dirigée sur le marteau d'abattage ; et
le fait d'ignorer ces cycles d'arrêt (SC) complètement lors de la détermination du taux d'usage du marteau d'abattage.

5. Procédé selon l'une quelconque des revendications précédentes, **caractérisé par**
l'examen du fonctionnement du dispositif de percussion par rapport aux cycles d'horloge (t_{tick}) du fonctionnement du dispositif de chronométrage (61) dans l'unité de commande (60) ;
l'addition des cycles de temps (t_{tick}) de manière cumulée dans le compteur de temps (62) après avoir rencontré au moins un premier critère préétabli pour les résultats de mesure ;
l'interruption de l'addition des cycles d'horloge (t_{tick}) dans le compteur de temps (62) lorsqu'un second critère préétablie est rencontré ; et
la poursuite de l'addition de cycles d'horloge (t_{tick}) dans le compteur de temps (62), lorsque le premier critère préétabli est à nouveau rencontré.

6. Procédé selon l'une quelconque des revendications précédentes, **caractérisé par**
la mesure avec le capteur d'accélération (11) de vibrations provoquées par le fonctionnement du dispositif de percussion (4) ;
l'examen des résultats de mesure par rapport aux cycles d'horloge (t_{tick}) du fonctionnement du dispositif de chronométrage (61) dans l'unité de commande (60) ;
le comptage des cycles d'horloge (t_{tick}) lorsque la valeur du résultat de mesure dépasse un niveau de déclenchement prédéfini (28) ;
l'interruption du comptage des cycles d'horloge (t_{tick}) après qu'un temps d'arrêt prédéfini (tₛₜₒₚ₁) s'est écoulé depuis le dépassement du niveau de déclenchement (28) sans un nouveau dépassement du niveau de déclenchement (28) ;
la détermination du dernier dépassement du niveau de déclenchement (28) et la définition du cycle d'horloge (t_{tick}) qui le suit comme temps final du cycle d'impact (IC) ; et
l'addition des cycles d'horloge (35) entre les temps de démarrage et d'achèvement du cycle d'impact au compteur de temps (62).

7. Procédé selon l'une quelconque des revendications précédentes 1 à 5, **caractérisé par**
la mesure avec un capteur de pression (12) positionné dans le marteau d'abattage (1) de la pression d'un support de pression agissant dans un circuit de support de pression du dispositif de percussion(4) ;
la détection d'une impulsion de pression (25) provoquée par le cycle de travail du dispositif de percussion (4) au cours d'un cycle d'impact (IC) ;
la détermination des temps de démarrage et d'achèvement du cycle d'impact (IC) sur la base de l'impulsion de pression ; et
l'utilisation des temps de démarrage et d'achèvement du cycle d'impact (IC) pour définir le cycle d'impact (IC) et la pause d'impact (IP).

8. Procédé selon l'une quelconque des revendications précédentes, **caractérisé par**
la comparaison du temps d'impact accumulé dans le compteur de temps (62) avec au moins une valeur limite de temps d'impact prédéfinie et l'indication que la valeur limite a été dépassée.

9. Procédé selon la revendication 2, **caractérisé par**
la comparaison du temps d'usage accumulé dans le compteur de temps (62) avec au moins une valeur limite de temps d'usage prédéfinie et l'indication que la valeur limite a été dépassée.

10. Procédé selon l'une quelconque des revendications précédentes, **caractérisé par**
la comparaison du temps de pause accumulé dans le compteur de temps (62) avec au moins une valeur limite de temps de pause prédéfinie et l'indication que la valeur limite a été dépassée.

11. Procédé selon l'une quelconque des revendications précédentes, **caractérisé par**
la surveillance du fonctionnement du marteau d'abattage (1) au cours d'un temps de surveillance et l'identification de plusieurs cycles d'impact (IC) et de la durée de chaque cycle d'impact ; et
l'utilisation de la distribution des durées des cycles d'impact (IC) comme un critère supplémentaire dans la détermination du taux d'usage.

12. Marteau d'abattage comprenant :
des moyens de fixation pour fixer le marteau d'abattage (1) de manière amovible à un mât d'une machine de base ;
un dispositif de percussion (4) pour générer des impulsions d'impact ;
un outil (6) agencé pour recevoir des impulsions d'impact et les transmettre au matériau (5) à abattre ; et
au moins un dispositif de mesure (10) pour déterminer le taux d'usage du marteau d'abattage (1), le dispositif de mesure (10) comprenant au moins un capteur (11) pour mesurer au moins un phénomène physique provoqué par le cycle de travail du dispositif de percussion (4), au moins une unité de commande (60) pour traiter les résultats de mesure et déterminer le taux d'usage et par ailleurs au moins un compteur dans lequel les valeurs représentant le taux d'usage sont ajoutées de manière cumulée ;
le dispositif de mesure (10) étant également agencé pour identifier sur la base des résultats de mesure reçus du capteur (11) le démarrage et l'achèvement du cycle d'impact (IC) du dispositif de percussion (4) et calculer la durée du cycle d'impact sur la base de celui-ci ;
**caractérisé en ce que**
le dispositif de mesure (10) est fixé au marteau d'abattage (1), en sorte d'être un dispositif indépendant séparé de la machine de base,
le dispositif de mesure (10) est également agencé pour identifier des pauses d'impact (IP) entre les cycles d'impact (IC) et surveiller leur durée ;
le dispositif de mesure (10) est agencé pour identifier les pauses d'impact (IP) avec une durée plus courte que la limite de temps prédéfinie (t^{stop2}) ; et
le dispositif de mesure (10) est agencé pour sommer les durées des pauses d'impact (IP) ayant une durée plus courte que la limite de temps prédéfinie (tₛₜₒₚ₂) pour définir le temps de pause total et prendre en compte le temps de pause total en tant que partie du taux d'usage.

13. Marteau d'abattage selon la revendication 12, **caractérisé en ce que**
une limite de temps (tₛₜₒₚ₂) de longueur souhaitée pour des pauses d'impact (IP) est réglable dans l'unité de commande (60) du dispositif de mesure (10).

14. Marteau d'abattage selon la revendication 12 ou 13, **caractérisé en ce que** le capteur est un capteur d'accélération (11) ; et
le capteur d'accélération (11) est fixé au corps (56) du dispositif de percussion (4) pour mesurer les vibrations provoquées par le cycle de travail du dispositif de percussion.

15. Marteau d'abattage selon la revendication 12 ou 13, **caractérisé en ce que**
le capteur est un capteur d'accélération (11) agencé pour mesurer les vibrations provoquées par le cycle de travail du dispositif de percussion ;
il y a au moins un boîtier protecteur (9) autour du dispositif de percussion (4) ; et le capteur d'accélération (11) est fixé au boîtier protecteur (9).

16. Marteau d'abattage selon la revendication 12 ou 13, **caractérisé en ce que** le dispositif de percussion (4) est hydraulique ;
le capteur est un capteur de pression (12) agencé pour mesurer l'impulsion de pression (25) provoquée par le fonctionnement du dispositif de percussion dans le circuit de moyen de pression du dispositif de percussion ; et
le capteur de pression (12) est agencé dans le marteau d'abattage (1).

17. Dispositif de mesure du taux d'usage d'un marteau d'abattage comprenant :
au moins un capteur (11, 12, 57, 58) avec lequel au moins un phénomène physique provoqué par le fonctionnement du dispositif de percussion (4) appartenant au marteau d'abattage (1) est mesuré ;
au moins une unité de commande (60) pour traiter les résultats de mesure reçus du capteur et déterminer le taux d'usage ;
l'unité de commande (60) comprenant au moins un dispositif de chronométrage (61) et au moins un compteur de temps (62) ;
l'unité de commande (60) étant agencée pour identifier sur la base des résultats de mesure le démarrage et l'achèvement de cycles d'impact du dispositif de percussion (4) et déterminer la durée de chaque cycle d'impact (IC) ;
l'unité de commande (60) étant agencée pour ajouter les durées des cycles d'impact (IC) de manière cumulée dans le compteur de temps (62) ;
**caractérisé en ce que**
l'unité de commande (60) est également agencée pour identifier des pauses d'impact (IP) entre les cycles d'impact (IC) et surveiller leur durée ;
l'unité de commande (60) est agencée pour identifier et prendre en compte les pauses d'impact (IP) d'une durée plus courte que la limite de temps prédéfinie (tₛₜₒₚ₂) ; et
l'unité de commande (60) est agencée pour sommer les durées des pauses d'impact (IP) ayant une durée plus courte que la limite de temps prédéfinie (tₛₜₒₚ₂) afin de définir le temps de pause total et de prendre en compte le temps de pause total en tant que partie du taux d'usage.
